# EUROPÄISCHE PATENTSCHRIFT

(11) **EP 3 632 673 B1**
(45) Veröffentlichungstag und Bekanntmachung des Hinweises auf die Patenterteilung: **06.04.2022**
(21) Anmeldenummer: 19198540.7
(22) Anmeldetag: 20.09.2019
(51) Int. Cl.: B32B 7/02, B32B 15/085, B32B 15/09, B32B 15/20, B32B 27/08, B32B 27/30, B32B 27/32, B32B 27/34, B32B 27/36, B65D 30/02, B65D 65/40, F42B 39/00

(54) **VERPACKTER EXPLOSIVMITTELHALTIGER FORMKÖRPER UND VERFAHREN ZUM VERPACKEN DES FORMKÖRPERS**
PACKAGED EXPLOSIVE AGENT CONTAINING MOULDED BODY AND METHOD FOR PACKAGING THE MOULDED BODY
CORPS MOULÉ CONTENANT UN MILIEU EXPLOSIF EMBALLÉ ET PROCÉDÉ D'EMBALLAGE DU CORPS MOULÉ

(30) Priorität: 02.10.2018 DE 102018124302
(43) Veröffentlichungstag der Anmeldung: 08.04.2020
(73) Patentinhaber: Muni Berka GmbH, 06536 Südharz (DE)
(72) Erfinder: HANSER, Walter, 79189 Bad Krozingen (DE); KRONZ, Michael, 79112 Freiburg (DE); GREINER, Christian, 79539 Lörrach (DE); ZSCHOCH, Stefan, 06526 Sangerhausen (DE)
(74) Vertreter: Specht, Peter

(56) Entgegenhaltungen:
- DE-B- 1 181 108
- DE-U- 1 925 763

## Beschreibung

Die vorliegende Erfindung betrifft einen verpackten explosivmittelhaltigen Formkörper und ein Verfahren zum Verpacken des Formkörpers.

Explosivmittelhaltige Formkörper, wie z.B. Plastiksprengstoffe, werden bislang in Folien oder Papieren eng anliegend eingewickelt anschließend durch ein Selbstklebeetikett verschlossen. Die besagten Folien weisen zwar oftmals eine Metallschicht auf, allerdings ist gerade der Bereich in welchem die Öffnung durch ein Etikett verschlossen wird höheren Diffusionsverlusten an giftigen Markiermaterialien ausgesetzt, welche aus dem Formkörper ausgasen.

Eingewickelte Sprengstoff-Formkörper sind u.a. aus der DE 11 81 108 B bekannt. Mehrere dieser eingewickelten Sprengstoff-Formkörper werden sodann in einer Box oder einer Kiste gelagert, welche mit einer diffusionsdichten Folie ausgekleidet ist. Diese Auskleidungsfolie wird sodann durch Wärmeeintrag verschweißt oder verklebt.

Die DE 19 25 763 U beschreibt eine Verpackung von Munition, insbesondere des Kalibers 20-40, die z.B. in einer Holzbox gelagert sein kann. Die Holzbox oder die Munition selbst kann mit einem Folienbeutel verpackt und verschweißt werden.

Andere Ansätze gehen davon aus die Formkörper zwischen zwei Folienlagen zu legen und Randseitig mit großem Abstand zum Formkörper zu verschweißen, so dass der Schweißbereich außerhalb des Kontaktbereichs des Formkörpers ist. Derart verpackte Formkörper sind allerdings schlecht in Magazinen lagerbar. Zudem ist die Portionierung meist schwierig, da man kein eng anliegendes Verpackungsmaterial hat, sondern einen viereckigen breitflächigen Folienbeutel mit dem Formkörper in der Mitte.

Ausgehend von dieser Vorbetrachtung ist es die Aufgabe der vorliegenden Erfindung einen verpackten Formkörper bereitzustellen, welcher einfach lagerbar und besser portionierbar ist und zugleich den Nutzer bei längerer Lagerung sicher vor ausgasenden Zuschlagstoffen schützt.

Die Erfindung löst die vorliegende Aufgabe durch den Gegenstand des Anspruchs 1 sowie durch ein Verfahren mit den Merkmalen des Anspruchs 13.

Ein erfindungsgemäß verpackter explosivmittelhaltiger Formkörper weist den Formkörper mit einem Explosivmittel und einem ausgasenden Zuschlagstoff, insbesondere einem Markierungsmittel, auf. Der Formkörper kann beispielsweise als Plastiksprengstoff ausgebildet sein.

Weiter weist der verpackte Formkörper eine Verpackung auf. Diese Verpackung umfasst einen Folienbeutel aus einer Verbundfolie. Die Verbundfolie umfasst zumindest eine Diffusionsbarriereschicht und ein verschweißbares Material.

Es kann eine lagenweise Verbundfolie sein, in welcher eine Diffusionsbarriereschicht z.B. aus Metall vorgesehen ist und eine Schicht aus dem verschweißbarem Material.

Es kann allerdings auch eine Verbundfolie sein mit lediglich einer Lage bzw. Schicht nämlich der Diffusionsbarriereschicht. Dies ist der Fall wenn z.B. Metallpartikel in einem Kunststoffmatrixmaterial eingebettet sind und somit eine Diffusionsbarriere bilden. In diesem Fall ist das Material der Kunststoffmatrix verschweißbar und die Kombination aus Metallpartikeln und Kunststoff wird als Verbund im Rahmen der vorliegenden Erfindung verstanden.

Der Folienbeutel weist eine Öffnung auf, durch welche der Formkörper in den Folienbeutel einführbar ist. Diese Öffnung ist allerdings durch eine erste Linienschweißnaht verschlossen. Die Schweißnaht ist dabei produktnah am Formkörper positioniert, also in einem Abstand von weniger als 2 cm zu einer formkörperberührenden Innenfläche des Folienbeutels.

Eine derart nahe Anordnung einer Schweißnaht nach dem Einbringen eines Formkörpers in eine Verpackung war bislang noch nicht bekannt. Dadurch kann eine bessere Lagerfähigkeit der Formkörper erreicht werden.

Vorteilhafte Ausgestaltungen der Erfindung sind Gegenstand der Unteransprüche.

Der Formkörper kann im Folienbeutel vorteilhaft vakuumverpackt bzw. vakuumiert verpackt sein. Dies ist insbesondere von Vorteil, da dadurch Nebenreaktionen mit Sauerstoff oder dergleichen verhindert werden. Zugleich liegt der Folienbeutel am Formkörper dicht an, so dass eine bessere Portionierung des Formkörpers durch Zuschneiden durch den Folienbeutel hindurch möglich ist.

Als Diffusionsbarriereschicht kann vorzugsweise eine metallische Schicht, insbesondere eine Aluminiumschicht, verwendet werden. Metalle sind hervorragende Barriereschichten. Sie können mit geringer Schichtdicke in einer Folie angeordnet werden, so dass die Biegsamkeit der Folie erhalten bleibt. Alternativ kann eine Polyamid- und/oder EVOH-Schicht als Diffusionsbarriereschicht genutzt werden. Hierbei ist allerdings eine größere Schichtdicke zu wählen.

Das verschweißbare Material kann insbesondere als Schicht, vorzugsweise als Polyethylenschicht, ausgebildet sein. Sie kann materialsparend lediglich im Bereich der Öffnung angeordnet oder kann sich aber auch über den gesamten Innenraum des Folienbeutels erstrecken, so dass der Schweißbereich, je nach Außenkontur des Formkörpers, frei gewählt werden kann.

Die Verbundfolie kann vorteilhaft eine Stützschicht aus einem polymeren Material, insbesondere aus Polyethylenterephthalat, aufweisen. Diese Stützschicht stabilisiert die Diffusionsbarriereschicht, so dass diese bei geringen Schichtdicken nicht reißt und der Folienbeutel zugleich biegsam bleibt.

Der Folienbeutel kann parallel zur ersten Linienschweißnaht eine zweite Linienschweißnaht aufweisen um so eine zweite Verschlussbarriere zu bilden, sollte sich die erste Linienschweißnaht lösen.

Da das Schweißwerkzeug nur kurzzeitig mit dem Folienbeutel in Kontakt tritt ist die Realisierung einer Flächenschweißnaht schwer realisierbar. Zur Vermeidung eines übermäßigen Wärmeeintrags, welcher im Fall einer metallischen Diffusionsbarriereschicht und der damit verbundenen guten Wärmeleitfähigkeit noch ungünstiger ist, ist es daher von Vorteil, wenn die erste und/oder zweite Linienschweißnaht eine Nahtbreite von weniger als 3 mm, vorzugsweise weniger als 2,5 mm, aufweist.

Der Abstand zwischen der ersten Linienschweißnaht zur zweiten Linienschweißnaht ist möglichst gering zu wählen, so dass bei teilweiser Schädigung der ersten Linienschweißnaht diese trotzdem noch für andere Bereiche der Öffnung eine dichtende Wirkung hat. Ein Abstand von weniger als 2 cm, vorzugsweise weniger als 1 cm hat sich dabei als günstig erwiesen.

Der Abstand der ersten Linienschweißnaht zum Formkörper und/oder einer formkörperberührenden Innenfläche des Folienbeutels kann vorteilhaft weniger als 1 cm betragen. Dadurch wird auch ein übermäßiger Materialüberstand vermieden, so dass z.B. im Fall einer stangenförmigen Ausgestaltung des Formkörpers dieser leicht in eine Transporthülse geschoben werden kann. Ein übermäßiger Materialüberstand wäre hierbei nur hinderlich.

Sofern das Markierungsmittel Dimethyl-Dinitro-Butan ist, sollte die Diffusionssperrschicht zur Verhinderung der Diffusion dieses Markierungsmittels ausgebildet sein. Bevorzugte Schichtdicken für die Diffusionssperrschicht und die weiteren Schichten finden sich in der nachfolgenden Beschreibung eines konkreten Ausführungsbeispiels.

Der Folienbeutel kann randseitig zwei Flächenschweißnähte aufweisen mit einer Nahtbreite von zumindest 3,5 mm. Auch wenn der Folienbeutel an den Randseiten gefaltet werden sollte stellen die Flächenschweißnähte eine sichere Verbindung dar. Die Flächenschweißnähte können vorteilhaft vor dem Befüllen des Folienbeutels angebracht werden.

Der Folienbeutel kann aus zwei miteinander verbundenen Folienlagen der Verbundfolie bestehen und an drei Seiten, also der Seite der Öffnung und den benachbarten Seiten verschweißt sein und entlang der vierten Seite einen nahtlosen, insbesondere schweißnahtlosen, Übergang zwischen der ersten und der zweiten Folienlage aufweisen. Dieser schweißnahtlose Übergang ist vorteilhaft, da es bei der Fertigung, z.B. bei der Faltung des Folienbeutels durch einen Stempel, an dieser Stelle nicht zu einem Lösen oder Schwächen einer Schweißnaht kommen kann.

Ein erfindungsgemäßes Verfahren zur Verpackung eines explosivhaltigen Formkörpers, insbesondere des erfindungsgemäßen Formkörpers, umfasst die folgenden Schritte:
I. Bereitstellen eines Folienbeutels umfassend zwei Folienlagen, welche entlang einer ersten, einer zweiten und einer dritten Seite miteinander verbunden sind, wobei die Folienlagen an der Seiten miteinander verschweißt sind und entlang einer dritten Seite ein nahtloser Übergang zwischen den zwei Folienlagen vorliegt und wobei der Folienbeutel entlang einer vierten Seite eine Öffnung aufweist;
II. Ausformen des Folienbeutels zur Aufnahme eines Formkörpers durch die Öffnung, vorzugsweise mittels eines Stempels;
III. Einführen des Formkörpers in den Folienbeutel
IV. Vakuumieren und diffusionsdichtes Verschweißen des Folienbeutels entlang der Öffnung durch Aufbringen einer Linienschweißnaht.

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen:
- Fig. 1: Draufsicht auf einen Folienbeutel zur Verpackung für einen explosivmittelhaltigen Formkörper;
- Fig. 2: Ansicht eines verpackten explosivmittelhaltigen Formkörpers; und
- Fig. 3: Schichtfolge einer Folienlage der Verpackung.

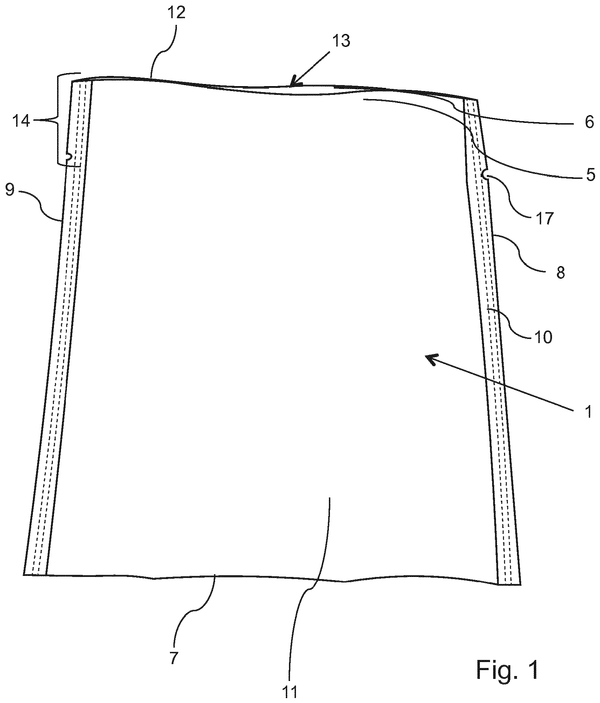

Fig. 1 zeigt eine Verpackung zur Verpackung eines explosivmittelhaltigen Formkörpers. Die Verpackung 1 weist zumindest eine Diffusionssperrschicht auf.

Die Diffusionssperrschicht 2 kann vorzugsweise als eine Kunststoffschicht aus Polyamid oder EVOH, ein Kunststoff mit dispergierten Metallpartikeln und/oder eine Metallschicht ausgebildet sein. Im Fall einer Metallschicht ist eine Aluminiumschicht besonders bevorzugt. Die Metallschicht kann eine Schichtdicke von zumindest 3 µm, vorzugsweise zumindest 5 µm, insbesondere 6 bis 20 µm, aufweisen. Die Prüfung kann gemäß DIN EN 10204 erfolgen.

Kommt Polyamid oder EVOH zum Einsatz, so beträgt die bevorzugte Schichtdicke zumindest 18 µm, vorzugsweise zwischen 20 bis 55 µm.

Zusätzlich zur vorgenannten Diffusionssperrschicht 2 kann die Verpackung 1 eine polymere Stützschicht 3, beispielsweise aus Polyethylenterephthalat, aufweisen. Die Stützschicht 3 kann vorzugsweise farbig, insbesondere grün z.B. moosgrün, schwarzgrün oder graugrün eingefärbt sein, als Tarnfarben z.B. für Landstreitkräfte. Hierfür kann die Stützschicht ein Kaschierungsmittel aufweisen. Alternativ kann das Kaschierungsmittel allerdings auch eine gesonderte Schicht zwischen der Diffusionssperrschicht 2 und der polymeren Stützschicht 3 angeordnet sein. Die polymere Stützschicht kann eine Schichtdicke von zumindest 5 µm, vorzugsweise 7 bis 20 µm, aufweisen.

Die Diffusionssperrschicht 2 weist weitere Schichten aus polymeren verschweißbaren Material auf, welches verschweißbar ausgebildet ist. Es ist im Fall der Diffusionssperrschicht 2 mit dispergierten Metallpartikeln allerdings auch denkbar dass der Kunststoff in welchem die Metallpartikel dispergiert sind, selbst verschweißbar ist.

Die Verpackung ist als Folie ausgebildet, vorzugsweise als Verbundfolie 4, umfassend zumindest die Diffusionssperrschicht und zumindest einseitig die Schicht 20 aus dem polymeren verschweißbaren Material. Dabei kann es sich um eine Heißsiegelschicht handeln. Ein bevorzugtes Material der Heißsiegelschicht ist Polyethylen, welches zumindest zu 30 Gew.%, vorzugsweise zu mehr als 90 Gew.%, im Material der Heißsiegelschicht enthalten sein kann. Diese Schicht 20 kann eine Schichtdicke von zumindest 40 µm aufweisen, vorzugsweise zwischen 50-100 µm, besonders bevorzugt zwischen 60 bis 90 µm. Material und Schichtdicke ist durch IR-Spektroskopie und anhand der DIN 55543-1 nachweisbar.

Die Verpackung in Fig. 1 ist als Folienbeutel 11 ausgebildet. Dabei wurde eine Folienlage zusammengeklappt und/oder gefaltet, so dass zwei Folienlagen 5 und 6 übereinandergelegt werden und dadurch bereits eine verschlossene erste Beutelseite 7 geschaffen wurde mit nahtlosem Übergang zwischen den zwei Folienlagen 5 und 6.

Randseitig zu der ersten nahtlosen Beutelseite sind die Folienbeutellagen 5 und 6 zwei Beutelseiten 8 und 9 jeweils durch eine Flächenschweißnaht 10 verbunden. Diese Flächenschweißnaht erstreckt sich vorzugsweise über die gesamte Seitenlänge der jeweiligen Beutelseite 8 oder 9.

Die jeweilige Flächenschweißnaht 10 weist eine Nahtbreite n von zumindest 3,5 mm, vorzugsweise 5 mm, über die Länge der Flächenschweißnaht auf.

Zum Befüllen des Folienbeutels 11 ist entlang einer Beutelseite 12 eine Öffnung 13 vorgesehen, über welche der Folienbeutel 11 mit befüllbar ist.

Zur Befüllung des Folienbeutels 11 wird zunächst ein Stempel in der Form des explosivmittelhaltigen Formkörpers in den Folienbeutel eingeführt und dadurch die erste Beutelseite zu einer Fläche umgeformt, welche einem Teilbereich der Außenkontur des jeweiligen Formkörpers entspricht.

Im Fall einer zylindrischen Stange ist die Fläche einem Teilbereich der Mantelfläche der zylindrischen Stange nachempfunden und im Fall eines quaderförmigen Formkörpers ist die Fläche im Wesentlichen als ein Rechteck ausgebildet.

Durch den Stempel wird zugleich die Öffnung 13 erweitert und nimmt die Form des Formkörpers ein.

Sodann wird der explosivmittelhaltige Formkörper durch die Öffnung 13 in den Folienbeutel 11 eingeführt. Das Einführen erfolgt mittels einer Zange mittels welcher ein Abstand zwischen dem explosivhaltigen Formkörper und dem Folienbeutel 11 während des Einführens des Formkörpers eingehalten werden kann.

Um ein Einfallen der durch den Stempel verformten Folienbeutel 11 zu verhindern, kann eine Kastenform genutzt werden, welche in den Innenraum der Folienbeutel zeitweilig eingesetzt und nach dem Einsetzen des Formkörpers wieder entfernt werden kann.

Durch die Verformung des Folienbeutels 11 durch den Stempel und durch die Nutzung der Zange kann eine Verschmutzung der Innenseiten des Folienbeutels 11 in einem Einführbereich 14 durch Explosivmittel verhindert werden.

Anschließend wird der Folienbeutel 11 vakuumiert. Hierfür wird dem Folienbeutel Luft entzogen. Dadurch liegen die Innenseiten der Folienlagen 5 und 6 im Einführbereich 14 noch dichter aufeinander.

Schließlich wird der Folienbeutel 11 durch eine erste Linienschweißnaht 15 verschweißt. Hierfür kann ein Vakuum-Impuls-Verfahren eingesetzt werden. Dabei ist darauf zu achten, dass der Schweißbereich frei von zündfähigen Explosivstoffen ist. Die Linienschweißnaht ist produktnah gegenüber dem explosivstoffhaltigen Formkörper angeordnet, also vorzugsweise in einem Abstand von weniger als 2cm zum Formkörper, vorzugsweise weniger als 1cm zum Formkörper, insbesondere zwischen 2 bis 8 mm zum Formkörper.

Die Linienschweißnaht 15 weist eine Nahtbreite von weniger als 3 mm, vorzugsweise weniger als 2,5 mm auf.

Eine zweite Linienschweißnaht 16 welche im Wesentlichen parallel zur ersten Linienschweißnaht 15 verläuft, ist auf der zum Formkörper abgewandten Seite der ersten Linienschweißnaht 15 angeordnet ist. Der Abstand der beiden Linienschweißnahten beträgt dabei weniger als 2 cm, vorzugsweise weniger als 1 cm, vorzugsweise zwischen 0,3 und 0,9 mm.

Beim Erzeugen der ersten Linienschweißnaht 15 und ggf. auch der zweiten Linienschweißnaht 16 ist der Bereich des Folienbeutels 11 zwischen der ersten Linienschweißnaht und dem Formkörper durch eine Kühlleiste, z.B. eine Klemmleiste, gekühlt, so dass ein Wärmeeintrag zwischen dem Schweißgerät und dem Formkörper verringert wird.

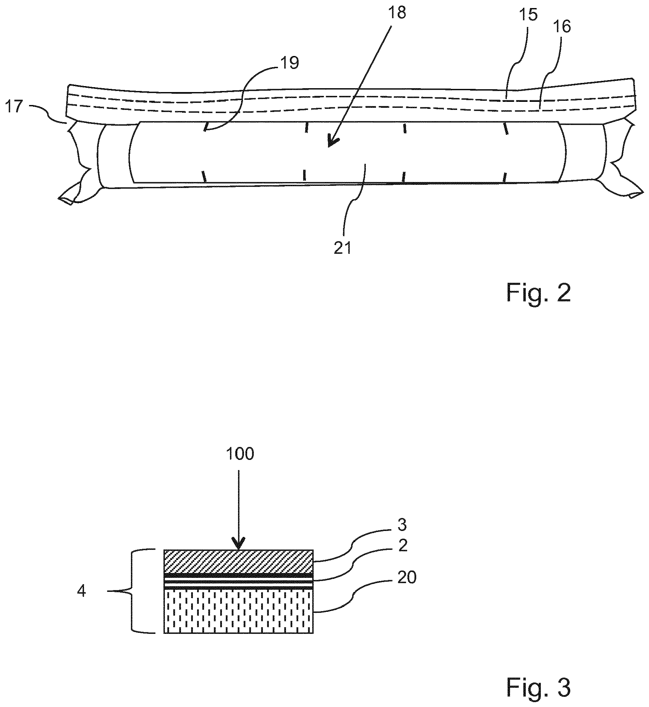

Ein Ausführungsbeispiel für einen fertig-verpackten explosivmittelhaltigen Formkörper ist in Fig. 2 dargestellt.

Der Formkörper selbst ist in Fig. 2 durch die Verpackung 1 verdeckt, allerdings ist dessen Form durch die Außenkontur einfach zu erkennen.

Er kann beispielsweise durch Strangpressen oder Extrudieren gefertigt werden. Der Formkörper ist vorzugsweise plastisch-formstabil.

Der Formkörper weist neben dem Explosivmittel zudem ein Markierungsmittel, insbesondere einen Geruchsstoff, auf, welche ein Auffinden des Formkörpers im unverpackten Zustand z.B. durch Hunde ermöglicht. Dieses Markierungsmittel kann besonders bevorzugt Dimethyl-Dinitro-Butan (DMDNB) sein.

Weitere Inhaltsstoffe des Formkörpers können das Explosivmittel, z.B. Pentaerythrittetranitrat (PETN), auch Nitropenta genannt, enthalten sein, sowie ggf. noch Plastifizierungsmittel, Phlegmatisierungsmittel und/oder Metallseife und ggf. auch weitere Substanzen. Als Explosivmittel können allerdings auch andere Verbindungen und/oder Gemische genutzt werden.

Die bekannten und verbreiteten Markierungsmittel sind meist gesundheitsschädlich und weisen typenbedingt einen hohen Dampfdruck auf. Anders gesagt, der Formkörper gast aus, wobei das Markierungsmittel aus dem Formkörper austritt. Dies führt bei Betreten eines Sprengstofflagers zu einer erhöhten Exposition mit diesen gesundheitsschädlichen Gasen.

Die Verpackung 1 weist vorzugsweise eine Ölbeständigkeit gemäß DIN ISO 1817 (Bei einem Scheibendurchmesser von 60 mm und einer Behandlung von 72h bei 70°C mit ASTM-ÖI Nr. 3) auf. Dies bedeutet insbesondere auch kein Durchdringen der Heißsiegelschicht, kein Quellen des Verpackungsmaterials, kein Delaminieren und kein Verspröden der Verpackung.

Weiterhin ist der Schweißprozess derart zu optimieren, dass die Siegelnahtfestigkeit, insbesondere die Siegelnahtfestigkeit im Bereich ersten und/oder zweiten Linienschweißnaht mehr als 20 (N pro 15 mm Fläche), vorzugsweise mehr als 30 (N pro 15 mm Fläche) gemäß DIN 55529 (Abschnitt 2.1.1) beträgt. Dabei wird ein Streifen mit einer Messlänge von 100 mm und einer Breite von 15 mm genutzt. Die Prüfgeschwindigkeit beträgt 100 mm/min bei 10% Fehlertoleranz. Es werden zumindest 5 Messwerte ermittelt.

Die Durchstichkraft in N beträgt mehr als 5 N, vorzugsweise zwischen 6 und 40 N, gemäß DIN EN 14477.

Die Wasserdampfdurchlässigkeit kann gemäß der DIN EN ISO 15106-3 nachgewiesen werden. Sie sollte vorzugsweise unter den DIN-Bedingungen (Klima 3 40/90) bei weniger als 0,05 g/(m²xd) liegen. d steht für die Einheit "Tag", also 24h.

Der verpackte explosivmittelhaltige Formkörper kann durch eine Kalibrierhülse durchgeschoben werden, wobei die Linienschweißnahten 15 und 16 zur Mantelfläche der Hülse zeigen.

Fig. 3 zeigt nochmals eine Schichtabfolge einer Folie für die Ausführungsvarianten der Fig. 1 und 2.

Der Pfeil 100 zeigt die Stapelrichtung der Verbundfolie 4 von einer Außenseite zu einer Innenseite, welche ggf. formkörperberührend, ist. Die Verbundfolie weist die äußere Stützschicht 3, die Diffusionssperrschicht 2 und die Schicht 20 aus einem polymeren verschweißbaren Material an der formkörperberührenden Innenseite der Verbundfolie auf.

Die Schicht 20 kann auch lediglich im Bereich der ersten und/oder zweiten Linienschweißnaht 15, 16 angeordnet sein und sich nicht weiter in den Innenraum des Folienbeutels 11 erstrecken.

Ein fertig-verpackter explosivmittelhaltiger Formkörper 18 kann randseitig zumindest eine, vorzugsweise zwei Aufreißsegmente 17, z.B. Aufreißlaschen odereinkerbungen aufweisen.

Weiterhin weist der verpackte explosivmittelhaltige Formkörper 18 eine Dosierungsangabe z.B. eine Abschnittsangabe 19 hinsichtlich des Gewichts einer abgetrennten Formkörperportion auf.

Dieser kann vorzugsweise vor dem Verpacken mit dem Formkörper auf die Verpackung 1 aufgebracht, insbesondere durch Laserbeschriftung, aufgebracht worden sein. Alternativ kann auch ein Etikett 21 mit der Abschnittsangabe 19 und ggf. weiteren Bezeichnungen aufgebracht werden.

Im Ergebnis wird ein explosivmittelhaltiger Formkörper mit definiertem stofflichen Zustand und definierter Geometrie mit einer Verpackung 1 mit korrespondierender Geometrie versehen.

Der verpackte Formkörper ist dicht gegenüber dem Austritt von Sprengstoff und giftigen Markierungsmitteln und zudem auch dicht gegen Eindringen von Wasser, Wasserdampf und sonstigen Verschmutzungen. Insgesamt ergibt sich eine Erhöhung der Handhabungs- und Funktionssicherheit für den Anwender. Die Wasserdichtheit der Verpackung erlaubt zudem die Verwendung des explosivhaltigen Formkörpers unter Wasser im verpackten Zustand.

Die vakuumierte Folie stabilisiert den Formkörper zusätzlich.

### Bezugszeichen

- 1: Verpackung
- 2: Diffusionssperrschicht
- 3: Stützschicht
- 4: Verbundfolie
- 5: Folienlage
- 6: Folienlage
- 7: erste Beutelseite
- 8: Beutelseite
- 9: Beutelseite
- 10: Flächenschweißnaht
- 11: Folienbeutel
- 12: Beutelseite
- 13: Öffnung
- 14: Einführbereich
- 15: Linienschweißnaht
- 16: Linienschweißnaht
- 17: Aufreißsegmente
- 18: verpackter Formkörper
- 19: Abschnittsangabe
- 20: Schicht aus polymeren verschweißbaren Material
- 21: Etikett
- 100: Pfeil

## Patentansprüche

1. Verpackter explosivmittelhaltiger Formkörper (18) umfassend
i) einen Formkörper mit einem Explosivmittel und einem ausgasenden Zuschlagstoff, insbesondere einem Markierungsmittel, und
ii) eine Verpackung (1) umfassend einen Folienbeutel (11) aus einer Verbundfolie (4) umfassend zumindest eine Diffusionsbarriereschicht (2) und ein verschweißbares Material (20),
**dadurch gekennzeichnet, dass**
der Folienbeutel (11) eine Öffnung (13) aufweist, durch welche der Formkörper in den Folienbeutel (11) einführbar ist und wobei diese Öffnung (13) durch zumindest eine erste Linienschweißnaht (15) in einem Abstand von weniger als 2 cm zu einer formkörperberührenden Innenfläche des Folienbeutels (11) verschweißt ist.

2. Verpackter explosivmittelhaltiger Formkörper nach Anspruch 1, **dadurch gekennzeichnet, dass** Formkörper durch den Folienbeutel (11) vakuumverpackt ist.

3. Verpackter explosivmittelhaltiger Formkörper nach Anspruch 1 oder 2, **dadurch gekennzeichnet, dass** die Diffusionsbarriereschicht (2) eine metallische Schicht, insbesondere eine Aluminiumschicht, ist und/oder eine Polyamid- und/oder EVOH-Schicht ist.

4. Verpackter explosivmittelhaltiger Formkörper nach einem der vorhergehenden Ansprüche, **dadurch gekennzeichnet, dass** das verschweißbare Material (20) als Schicht, vorzugsweise als Polyethylenschicht, zumindest im Bereich der Öffnung (13) angeordnet ist.

5. Verpackter explosivmittelhaltiger Formkörper nach einem der vorhergehenden Ansprüche, **dadurch gekennzeichnet, dass** die Verbundfolie (4) eine Stützschicht (3) aus einem polymeren Material, insbesondere aus Polyethylenterephthalat, aufweist.

6. Verpackter explosivmittelhaltiger Formkörper nach einem der vorhergehenden Ansprüche, **dadurch gekennzeichnet, dass** der Folienbeutel (11) parallel zur ersten Linienschweißnaht (15) eine zweite Linienschweißnaht (16) aufweist.

7. Verpackter explosivmittelhaltiger Formkörper nach Anspruch 6, **dadurch gekennzeichnet, dass** die erste und/oder zweite Linienschweißnaht (15, 16) eine Nahtbreite von weniger als 3 mm, vorzugsweise weniger als 2,5 mm, aufweist.

8. Verpackter explosivhaltiger Formkörper nach einem der vorhergehenden Ansprüche, **dadurch gekennzeichnet, dass** die erste Linienschweißnaht (15) zur zweiten Linienschweißnaht (16) einen Abstand von weniger als 2 cm, vorzugsweise weniger als 1 cm aufweist.

9. Verpackter explosivhaltiger Formkörper nach einem der vorhergehenden Ansprüche, **dadurch gekennzeichnet, dass** der Abstand der ersten Linienschweißnaht (15) zum Formkörper und/oder einer formkörperberührenden Innenfläche des Folienbeutels (11) weniger als 1 cm beträgt.

10. Verpackter explosivhaltiger Formkörper nach einem der vorhergehenden Ansprüche, **dadurch gekennzeichnet, dass** das Markierungsmittel Dimethyl-Dinitro-Butan ist und dass die Diffusionssperrschicht (2) zur Verhinderung der Diffusion dieses Markierungsmittels ausgebildet ist.

11. Verpackter explosivhaltiger Formkörper nach einem der vorhergehenden Ansprüche, **dadurch gekennzeichnet, dass** der Folienbeutel (11) randseitig zwei Flächenschweißnähte (10) aufweist mit einer Nahtbreite von zumindest 3,5 mm.

12. Verpackter explosivhaltiger Formkörper nach einem der vorhergehenden Ansprüche, **dadurch gekennzeichnet, dass** der Folienbeutel (11) aus zwei miteinander verbundenen Folienlagen (5, 6) der Verbundfolie (4) besteht und an drei Seiten (8, 9, 12) verschweißt ist und entlang der vierten Seite (7) einen nahtlosen, insbesondere schweißnahtlosen, Übergang zwischen der ersten und der zweiten Folienlage (5 und 6) aufweist.

13. Verfahren zur Verpackung eines explosivhaltigen Formkörpers nach einem der vorhergehenden Ansprüche, umfassend die folgenden Schritte:
I. Bereitstellen eines Folienbeutels (11) umfassend zwei Folienlagen (5, 6), welche entlang einer ersten, einer zweiten und einer dritten Seite (7, 8, 9) miteinander verbunden sind, wobei die Folienlagen (5, 6) an zwei der Seiten (8, 9) miteinander verschweißt sind und entlang einer dritten der Seiten (9) ein nahtloser Übergang zwischen den zwei Folienlagen (5, 6) vorliegt und wobei der Folienbeutel (11) entlang einer vierten Seite (12) eine Öffnung (13)aufweist;
II. Ausformen des Folienbeutels (11) zur Aufnahme eines Formkörpers durch die Öffnung (13), insbesondere mittels eines Stempels;
III. Einführen des Formkörpers in den Folienbeutel (11)
IV. Vakuumieren und diffusionsdichtes Verschweißen des Folienbeutels (11) entlang der Öffnung (13) durch Aufbringen zumindest einer Linienschweißnaht (15).

## Claims

1. Packaged explosive-agent-containing molded body (18), comprising
i) a molded body having an explosive agent and an outgassing additive, in particular a marking agent, and
ii) a package (1) comprising a film bag (11) made of a composite film (4) comprising at least a diffusion barrier layer (2) and a sealable material (20),
**characterized in that**
the film bag (11) has an opening (13) through which the molded body can be introduced into the film bag (11), and wherein this opening (13) is welded by at least one first line weld (15) at a distance of less than 2 cm from an inner surface of the film bag (11) which is in contact with the molded body.

2. Packaged explosive-agent-containing molded body according to claim 1, **characterized in that** the molded body is vacuum-packed by the film bag (11).

3. Packaged explosive-agent-containing molded body according to claim 1 or 2, **characterized in that** the diffusion barrier layer (2) is a metallic layer, in particular an aluminum layer, and/or is a polyamide and/or EVOH layer.

4. Packaged explosive-agent-containing molded body according to one of the preceding claims, **characterized in that** the weldable material (20) is arranged as a layer, preferably as a polyethylene layer, at least in the region of the opening (13).

5. Packaged explosive-agent-containing molded body according to one of the preceding claims, **characterized in that** the composite film (4) has a supporting layer (3) of a polymeric material, in particular polyethylene terephthalate.

6. Packaged explosive-agent-containing molded body according to one of the preceding claims, **characterized in that** the film bag (11) has a second line weld (16) parallel to the first line weld (15).

7. Packaged explosive-agent-containing molded body according to claim 6, **characterized in that** the first and/or second line weld (15, 16) has a seam width of less than 3 mm, preferably less than 2.5 mm.

8. Packaged explosive-agent-containing molded body according to one of the preceding claims, **characterized in that** the first line weld (15) is at a distance of less than 2 cm, preferably less than 1 cm, from the second line weld (16).

9. Packaged explosive-agent-containing molded body according to one of the preceding claims, **characterized in that** the distance of the first line weld (15) from the molded body and/or an inner surface of the film bag (11) in contact with the molded body is less than 1 cm.

10. Packaged explosive-agent-containing molded body according to one of the preceding claims, **characterized in that** the marking agent is dimethyl dinitro butane and **in that** the diffusion barrier layer (2) is formed to prevent diffusion of said marking agent.

11. Packaged explosive-agent-containing molded body according to one of the preceding claims, **characterized in that** the film bag (11) has two surface weld seams (10) on the edge side with a seam width of at least 3.5 mm.

12. Packaged explosive-agent-containing molded body according to one of the preceding claims, **characterized in that** the film bag (11) consists of two interconnected film layers (5, 6) of the composite film (4) and is welded on three sides (8, 9, 12) and along the fourth side (7) has a seamless, in particular weld-free, transition between the first and second film layers (5 and 6).

13. Method for packaging an explosive-agent-containing molded body according to one of the preceding claims, comprising the following steps of:
I. providing a film bag (11) having two film layers (5, 6) which are joined together along a first, a second and a third side (7, 8, 9), wherein the film layers (5, 6) are welded together along two of the sides (8, 9) and along a third of the sides (9) there is a seamless transition between the two film layers (5, 6) and wherein the film bag (11) has an opening (13) along a fourth side (12);
II. forming the film bag (11) to receive a molded body through the opening (13), in particular by means of a punch;
III. inserting the molded body into the film bag (11)
IV. vacuum sealing and diffusion-tight sealing of the film bag (11) along the opening (13) by applying at least one line weld (15).

## Revendications

1. Bloc moulé emballé contenant un explosif (18) comprenant
i) un bloc moulé avec un explosif et un additif libérant en gaz, en particulier en moyen de marquage, et
ii) un emballage (1) comprenant un sachet de film (11) formé d'un film composite (4) comprenant au moins une couche formant une barrière de diffusion (2) et un matériau soudable (20),
**caractérisé en ce que** le sachet de film (11) présente une ouverture (13) à travers laquelle le bloc moulé peut être introduit dans le sachet de film (11), l'ouverture (13) étant scellée par au moins une première soudure linéaire (15) à une distance de moins de 2 cm d'une face intérieure du sachet de film (11) qui vient en contact avec le bloc moulé.

2. Bloc moulé emballé contenant un explosif selon la revendication 1, **caractérisé en ce que** le bloc moulé est emballé sous vide par le sachet de film (11).

3. Bloc moulé emballé contenant un explosif selon la revendication 1 ou 2, **caractérisé en ce que** la couche formant une barrière de diffusion (2) est une couche métallique, en particulier une couche d'aluminium, et/ou une couche de polyamide et/ou d'EVOH.

4. Bloc moulé emballé contenant un explosif selon l'une des revendications précédentes, **caractérisé en ce que** le matériau soudable (20) est disposée sous la forme d'une couche, de préférence d'une couche de polyéthylène, au moins dans la région de l'ouverture (13).

5. Bloc moulé emballé contenant un explosif selon l'une des revendications précédentes, **caractérisé en ce que** le film composite (4) comporte une couche de support (3) à matériau polymère, de préférence en téréphtalate de polyéthylène.

6. Bloc moulé emballé contenant un explosif selon l'une des revendications précédentes, **caractérisé en ce que** le sachet de film (11) présente une deuxième soudure linéaire (16) parallèlement à la première soudure linéaire (15).

7. Bloc moulé emballé contenant un explosif selon la revendication 6, **caractérisé en ce que** la première soudure linéaire et/ou la deuxième (15, 16) ont une largeur de soudure inférieure à 3 mm, de préférence inférieure à 2,5 mm.

8. Bloc moulé emballé contenant un explosif selon l'une des revendications précédentes, **caractérisé en ce que** la première soudure linéaire (15) est distante de la deuxième soudure linéaire (16) de moins de 2 cm, de préférence de moins de 1 cm.

9. Bloc moulé emballé contenant un explosif selon l'une des revendications précédentes, **caractérisé en ce que** la distance entre la première soudure linéaire (15) et le bloc moulé et/ou une surface intérieure du sachet de film (11) au contact du corps moulé est inférieure à 1 cm.

10. Bloc moulé emballé contenant un explosif selon l'une des revendications précédentes, **caractérisé en ce que** le moyen de marquage est du diméthyldinitrobutane et **en ce que** la couche formant une barrière de diffusion (2) est conçue pour empêcher la diffusion de ce moyen de marquage.

11. Bloc moulé emballé contenant un explosif selon l'une des revendications précédentes, **caractérisé en ce que** le sachet de film (11) présente du côté des bords deux soudures de surface (10) dont la largeur est d'au moins 3,5 mm.

12. Bloc moulé emballé contenant un explosif selon l'une des revendications précédentes, **caractérisé en ce que** le sachet de film (11) se compose de deux épaisseurs de film (5, 6) du film composite (4) assemblées l'une à l'autre et est soudé sur trois côtés (8, 9, 12) et présente le long du quatrième côté (7) une transition sans joint, en particulier sans soudure, entre la première épaisseur de film et la deuxième (5 et 6).

13. Procédé pour emballer un bloc moulé contenant un explosif selon l'une des revendications précédentes, comprenant les étapes suivantes :
I. préparation d'un sachet de film (11) comprenant deux épaisseurs de film (5, 6) qui sont assemblées l'une à l'autre le long d'un premier bord, d'un deuxième et d'un troisième (7, 8, 9), les épaisseurs de film (5, 6) étant soudées ensemble sur deux des côtés (8, 9) et la transition entre les deux épaisseurs de film (5, 6) sur le troisième côté (9) se faisant sans joint, et le sachet de film (11) présentant une ouverture (13) le long d'un quatrième côté (12) ;
II. déformation du sachet de film (11) pour y loger un bloc moulé à travers l'ouverture (13), en particulier au moyen d'un poinçon ;
III. introduction du corps moulé dans le sachet de film (11) ;
IV. établissement d'un vide et soudage étanche à la diffusion du sachet de film (11) le long de l'ouverture (13) par l'application d'au moins une soudure linéaire (15).
